Europäisches Patentamt

European Patent Office

Office européen des brevets

(11) Veröffentlichungsnummer: **0 185 213 B1**

## (12) EUROPÄISCHE PATENTSCHRIFT

(45) Veröffentlichungstag der Patentschrift: **08.04.92**

(21) Anmeldenummer: **85114727.2**

(22) Anmeldetag: **19.11.85**

(51) Int. Cl.⁵: **H04M 3/18**, H04M 19/00

---

(54) **Schaltungsanordung zum Schutz einer Teilnehmerspeiseschaltung in einer vorzugsweise digitalen Fernsprechvermittlungsstelle gegen Überlastung.**

---

(30) Priorität: **19.12.84 DE 3446391**
          **19.12.84 DE 3446362**

(43) Veröffentlichungstag der Anmeldung:
**25.06.86 Patentblatt 86/26**

(45) Bekanntmachung des Hinweises auf die
Patenterteilung:
**08.04.92 Patentblatt 92/15**

(84) Benannte Vertragsstaaten:
**AT BE CH DE FR GB IT LI NL SE**

(56) Entgegenhaltungen:
**EP-A- 0 076 402**
**EP-A- 0 121 926**
**FR-A- 2 320 672**
**US-A- 4 203 141**
**US-A- 4 419 542**

(73) Patentinhaber: **SIEMENS AKTIENGESELL-
SCHAFT
Wittelsbacherplatz 2
W-8000 München 2(DE)**

(72) Erfinder: **Dragotin, Alexander, Dipl.-Ing.
Edelweisstrasse 177
W-8039 Puchheim(DE)**

EP 0 185 213 B1

## Beschreibung

Die Erfindung betrifft eine Schaltungsanordnung zum Schutz einer Teilnehmerspeiseschaltung in einer vorzugsweise digitalen Fernsprechvermittlungsstelle gegen Überlastungen aufgrund eines Kurzschlusses oder unzulässig niederohmigen Nebenschlusses zwischen den Adern einer Teilnehmeranschlußleitung.

Im Hinblick auf die geforderte Speiseleistung sind in Teilnehmerspeiseleitungen die Speisewiderstände relativ niederohmig. Die im Kurzschlußfall oder im Fall eines unzulässig niederohmigen Nebenschlusses durch diese Speisewiderstände fließenden Ströme sind so beträchtlich, daß die an den Speisewiderständen entstehenden Verlustleistungen zu Schädigungen derselben führen können.

Bei einer bekannten Schaltungsanordnung, die u.a. die Aufgabe des Schutzes der Speiseschaltung der Teilnehmeranschlußschaltung einer digitalen Zeitmultiplex-Fernsprechvermittlungsstelle hat (DE-A-33 12 935), wird in gleichbleibenden kurzen Zeitabständen der Strom der an die Teilnehmeranschlußschaltung angeschlossenen Teilnehmeranschlußleitung abgetastet und einer Analog-Digital-Wandlung unterworfen. Die Periodendauer der Abtastungen ist dabei ein ganzzahliger Bruchteil einer Periode eines beispielsweise durch das Starkstromnetz oder das Bahnnetz hervorgerufenen Längsstroms. Die digitalisierten Abtastwerte werden über eine solche Periode aufsummiert und der Summwert wird dann mit einem vorgegebenen zulässigen Maximalwert verglichen, wobei ein Überschreiten dieses Maximalwertes zu einer Unterbrechung des Speisestromkreises führt.

Bei dieser Anordnung ist vorgesehen, eine solche Unterbrechung auch dann vorzunehmen, wenn schon nach einer einzigen Abtastung der Wert des maximal zulässigen Stromes in festgelegtem hohen Ausmaß überschritten wird, womit auf eine Eliminierung des Einflusses von Längsströmen verzichtet wird, die in diesem Falle nur eine untergeordnete Rolle spielen.

Die Auswertung der geschilderten Messung und die entsprechende Veranlassung einer Schaltmaßnahme erfolgt im bekannten Falle durch einen Mikroprozessor, der als Teilsteuerwerk einer Gruppe von solchen Teilnehmeranschlußleitungen zugeordnet ist. Es hat sich gezeigt, daß eine solche Auswertung einen beträchtlichen Teil der zur Verfügung stehenden Bearbeitungszeit des Mikroprozessors in Anspruch nimmt, und daß diser in seiner eigentlichen Aufgabe als Steuerwerk insofern beträchtlich behindert ist, als Kurzschlüsse und unzulässig hohe Nebenschlüsse unverzüglich erkannt werden müssen und dementsprechend Schaltmaßnahmen sofort zu erfolgen haben.

Gemäß der Patentschrift US-A-4 203 141 ist des weiteren eine Schaltungsanordnung zum Schutz einer Last in einem Stromkreis einer PCM-Übertragungsstrecke vor einem Überlaststrom bekannt. Die genannte Schaltungsanordnung arbeitet in der Weise, daß sie im Überlastfall den Strom mit Hilfe eines im Strompfad liegenden Transistors zunächst über eine erste Zeitspanne auf einen bestimmten Wert begrenzt (Begrenzungszustand). Bei Ablauf der ersten Zeitspanne schaltet sie den Transistor in den Sperrzustand, wodurch der Stromkreis unterbrochen wird.

Der Sperrzustand des Transistors wird nach Ablauf einer zweiten Zeitspanne wieder aufgehoben und die geschilderte Arbeitsweise der Schaltungsanordnung beginnt von neuem, falls die Überlastbedingung weiterhin vorliegt.

Die genannte Schaltungsanordnung hat den Nachteil, daß bei kurzzeitig wiederholt auftretenden Überlastfällen zwar häufig der Begrenzungszustand erreicht wird, jedoch wegen des Nichtablaufens der ersten Zeitspanne der Sperrzustand nie angenommen wird. Auf diese Weise kommt es zu einer Überhitzung und schließlich zu einer Zerstörung des Transistors.

Die Aufgabe der Erfindung besteht daher darin, eine Schaltungsanordnung zum Schutz der Teilnehmerspeiseschaltung anzugeben, die diesbezüglich günstiger ist und die darüber hinaus auf die speziellen Gegebenheiten der Teilnehmerspeiseschaltung insoweit angepaßt ist,
als sie zwischen erhöhten Strömen, die auf die Aufladung von Kondensatoren, insbesondere Elektrolytkondensatoren mit hoher Kapazität, der Speiseschaltung und zwischen durch Kurzschlüsse und unerwünschte Nebenschlüsse hervorgerufenen erhöhten Strömen zu unterscheiden vermag.

Diese Aufgabe wird erfindungsgemäß durch die Merkmale des Anspruchs 1 gelöst.

In der Praxis entspricht die erste Zeitspanne die Aufladezeit der Kondensatoren der Teilnehmerspeiseschaltung, so daß dann wenn eine Stromerhöhung auf das Aufladen dieser Kondensatoren zurückzuführen ist oder aber wenn sonstige Kurzschlüsse oder niederohmige Nebenschlüsse nur kurzzeitig andauern, es zwar zu einer vorübergehenden Begrenzung des Speisestroms, nicht jedoch zu einer völligen Abschaltung kommt. Eine solche Abschaltung wird vielmehr lediglich dann vorgenommen, wenn nach Ablauf der ersten Zeitspanne immer noch die erhöhte Belastung der Teilnehmerspeiseschaltung bzw. die daraufhin zur Strombegrenzung führende Aussteuerung des Strombegrenzungselementes vorliegt oder sich innerhalb der zweiten Zeitspanne wieder eingestellt hat. Die zweite und dritte Zeitspanne sind entsprechend der Abkühlungszeit gemessen, die das im Begrenzungsbetrieb auf eine erhöhte Betriebstemperatur gebrachte Strombegrenzungselement benötigt, um sich wieder auf eine normale Betriebstemperatur abzukühlen. Die zweite Zeitspanne soll bewirken, daß es auch dann zu einer Unterbrechung des Speisestromkreises kommt, wenn die Überlastungen zwar jeweils nur so kurzzeitig sind, daß sie die erste Zeitspanne nicht überdauern, von daher also keine Unterbrechung des Speisestromkreises nach sich ziehen würden, dafür aber in Zeitabständen auftreten, die für eine Abkühlung des Strombegrenzungselementes nicht ausreichen.

Dem Nutzstrom auf der durch die Teilnehmerspeiseschaltung versorgten Teilnehmeranschlußleitung sind Störwechselströme in Form von Längsströmen auf den Teilnehmerleitungsadern überlagert, die auf Störeinstreuungen, beispielsweise durch das Wechselstromnetz oder durch das Bahnnetz bedingt sind. Solche Störströme können dazu führen, daß der vorgegebene Maximalwert des Speisestroms häufig kurzzeitig überschritten wird, ohne daß im Interesse des Schutzes der Teilnehmerspeiseschaltung eine Strombegrenzung erforderlich ist. Da eine Strombegrenzung mit Hilfe des erfindungsgemäß durch ein in einen Zweig der Teilnehmerspeiseschaltung eingefügtes Strombegrenzungselement zu einer Störung der Symmetrieverhältnisse auf den Adern der Teilnehmeranschlußleitung führt, ist eine im Hinblick auf die Längsströme überflüssige Strombegrenzung aber unerwünscht. Man könnte nun zwar den vorgesehenen Schwellwert für den Speisestrom, ab dem die Begrenzung einsetzt, so hoch legen, daß Längsströme nich mehr das Einsetzen des Begrenzungsbetriebs herbeiführen. Es muß dann allerdings damit gerechnet werden, daß, wenn durch einen niederohmigen Nebenfluß bedingte und damit länger andauernde erhöhte Ströme auf der Teilnehmeranschlußleitung in die Nähe eines solchen Grenzwerts kommen, die hierbei auftretende Verlustleistung doch zu hoch ist.

Gemäß einer weiteren Ausgestaltung der Erfindung wird daher bei der erfindungsgemäßen Schaltungsanordnung die Ansteuerschwelle, bei deren Überschreiten das Strombegrenzungselement in den Begrenzungsbetrieb gesteuert wird, entsprechend der Richtung und Amplitude von auf den Adern der Teilnehmeranschlußleitung als Störung auftretende Längswechselströmen erhöht oder erniedrigt.

Weitere Ausgestaltungen der Erfindung betreffen zweckmäßige schaltungstechnische Realisierungen.

Nachstehend wird die Erfindung anhand von Ausführungsbeispielen und unter Bezugnahme auf drei Figuren näher erläutert.

Die Fig. 1    zeigt ein erstes Ausführungsbeispiel der ererfindungsgemäßen Schaltungsanordnung,

die Fig. 2    zeigt den Verlauf von Ausgangssignalen an bestimmten Punkten der Schaltungsanordnung gemäß Fig. 1,

die Fig. 3    zeigt ein gem. der genannten weiteren Ausgestaltung der Erfindung konzipiertes weiteres Ausführungsbeispiel.

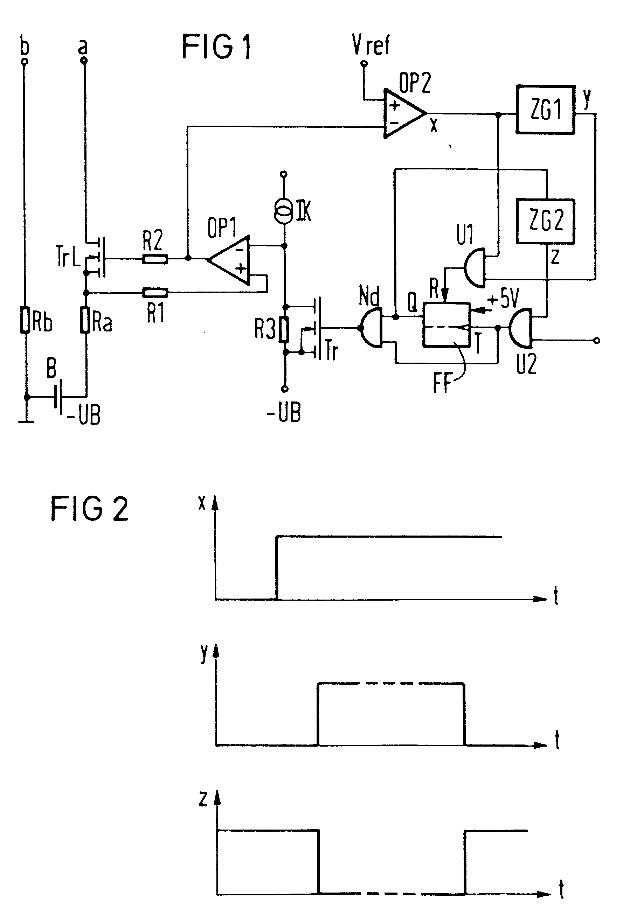

In der Figur 1 sind von einer Teilnehmerspeiseschaltung, die Bestandteile einer Teilnehmeranschlußschaltung sein soll, eine Speisebatterie B sowie Speisewiderstände Ra und Rb dargestellt. An die Anschlüsse a beträgt beispielsweise 20s, danach nimmt das Potential am Ausgang des Zeitgliedes ZG1 wieder den Binärwert 0 an, siehe y in Fig. 2.

Der Ausgang des ersten Zeitgliedes ZG1 ist mit dem einen Eingang eines UND-Gliedes U1 verbunden, dessen anderer Eingang an den Ausgang des Komparators OP2 angeschlossen ist. Der Ausgang des UND-Gliedes U1 steht mit dem Rücksetzeingang R einer bistabilen Kippstufe FF in Verbindung, bei der es sich um ein D-Flip-Flop handelt.

Der Ausgang Q der bistabilen Kippstufe FF ist mit dem einen Eingang eines NAND-Gliedes Nd verbunden, dessen Ausgang an dem Steuereingang des Transistors Tr liegt.

Der Ausgang Q der bistabilen Kippstufe FF ist ferner mit dem Eingang eines zweiten Zeitgliedes ZG2 verbunden, das so geartet ist, daß es normalerweise an seinem Ausgang dem Binärwert 1 entsprechendes Potential liefert und sofern an seinem Eingang ein Binärzeichenwechsel vom Binärwert 1 auf den Binärwert 0 stattfindet, an seinem Ausgang über die Dauer einer dritten Verzögerungszeit, die gleich lang wie die zweite Verzögerungszeit ist, also beispielsweise ebenfalls 20s beträgt, dem Binärwert 0 entsprechendes Potential abgibt um danach wieder dem Binärwert 1 entsprechendes Potential zu liefern.

Der Ausgang des Zeitgliedes ZG2 ist mit dem einen Eingang eines weiteren UND-Gliedes U2 verbunden, dessen Ausgang einerseits an den Takteingang T der bistabilen Kippstufe FF, andererseits an den zweiten Eingang des erwähnten NAND-Gliedes Nd angeschlossen ist. Dem anderen Eingang des UND-Gliedes kann ein Binärsignal zugeführt werden, das beispielsweise von einem Mikroprozessor geliefert wird, der in erster Linie als Teilsteuerwerk der Schaltungsgruppe dient, zu der die gezeigte Teilnehmerspeiseschaltung bzw. die zugehörige Teilnehmeranschlußschaltung gehört. Dieses Signal hat den Binärwert 0 wenn aus irgendwelchen anderen Gründen, beispielsweise zu Meßzwecken, der Speisestromkreis unterbrochen werden soll, normalerweise jedoch den Binärwert 1. Nachstehend wird die Funktionsweise der erläuterten Schaltungsanordnung noch mehr ins Einzelne gehend beschrieben.

Solange der Strom im Speisestromkreis und damit durch den Speisewiderstand Ra unterhalb eines vorgegebenen Maximalwerts liegt, ist der Spannungsabfall über dem Speisewiderstand Ra derart vom Spannungsabfall verschieden, den der durch die Referenzstromquelle IK gelieferte Strom am Widerstand R3 hervorruft, daß am Ausgang des Operationsverstärkers OP1 ein Potential auftritt, das den Transistor TrL voll aussteuert, dieser also einen konstanten niederohmigen Widerstand für den Speisestromkreis darstellt. Diese Stromunabhängigkeit des Transistorwiderstandes über einen gewissen Strombereich hinweg wird durch die erwähnte Verwendung eines Leistungs-FET als Transistor TrL gewährleistet.

Wenn der Spannungsabfall über dem Speisewiderstand Ra in die Nähe des Spannungsabfalls über dem Widerstand R3 kommt, wird der Transistor TrL durch den Operationsverstärker so ausgesteuert, daß sein Widerstand ansteigt und damit den Strom im Speisestromkreis begrenzt.

Der Wert der Ausgangsspannung des Operationsverstärkers OP1, der diesen Segrenzungs- bzw. Regelbetrieb bewirkt, führt aufgrund entsprechender Bemessung der Referenzspannung, die den Komparator OP2 beaufschlagt, und dessen Versorgungsspannung dazu, daß dieser hierauf mit einem Übergang reagiert. Das Zeitglied ZG1 liefert aber, wie dargelegt, dennoch während der ersten Verzögerungszeit, also für eine weitere Sekunde an seinem Ausgang ein dem Binärwert 0 entsprechendes Potential mit der Folge, daß die Verknüpfungsbedingung des UND-Gliedes U1 nicht erfüllt ist und sich am Leitfähigkeitszustand der bistabilen Kippstufe FF zunächst nichts ändert. Nach Ablauf dieser ersten Verzögerungszeit wird durch das Zeitglied ZG1 dem Binärwert 1 entsprechendes Potential geliefert und zwar für die Dauer der erwähnten zweiten Zeitspanne von 20s, so daß dann wenn der Begrenzungszustand, der zur Abgabe des Binärwerts 1 am Ausgang des Komparators OP2 führt, die erste Zeitspanne überdauert hat oder aber zu einem beliebigen Zeitpunkt innerhalb der zweiten Zeitspanne wieder auftritt, die Verknüpfungsbedingung des UND-Gliedes 1 erfüllt ist und dieses mit dem dann gelieferten Ausgangssignal vom Binärwert 1 die bistabile Kippstufe FF zurücksetzt. Das in dem dadurch erreichten Kippzustand am Ausgang Q der bistabilen Kippstufe abgegebene Signal vom Binärwert 0 wirkt sich über das NAND-Glied Nd auf die Steuerelektrode des Transistors Tr mit der Folge aus, daß dieser durchgesteuert wird und damit mit seiner Hauptstromstrecke den Widerstand R3 niederohmig überbrückt. Aufgrund der dabei am invertierenden Eingang des Operationsverstärkers OP1 entstehenden Spannungsänderung liefert dieser nunmehr eine derartige Ausgangsspannung, daß der Transistor TrL in den Sperrzustand gesteuert wird, also den Speisestromkreis unterbricht.

Das diesen Vorgang auslösende Signal vom Binärwert 0 am Ausgang der bistabilen Kippstufe FF hat am Ausgang des Zeitgliedes ZG2 einen Wechsel vom Binärwert 1 zum Binärwert 0 zur Folge, wobei die Abgabe des Binärwerts 0 über die Zeitdauer der dritten Zeitspanne, also ebenfalls 20s andauert siehe z in Fig. 2.. Während dieser Zeitspanne ist damit das Koinzidenzglied U2 gesperrt, so daß ein Wiederanschaltbefehl, der an den zweiten Eingang des Koinzidenzgliedes von dem erwähnten Mikroprozessor her gelangen kann, nicht weitergegeben wird. Die dritte Zeitspanne reicht aus, den Transistor TrL von der im Begrenzungsbetrieb erreichten Tempereratur auf eine Normaltemperatur abkühlen zu lassen.

Nach Ablauf der dritten Zeitspanne liefert das Zeitglied ZG2 wieder den Binärwert 1, das Koinzidenzglied U2 wird also freigegeben, so daß ein dann gegebenenfalls auftretender Flankenwechsel der vom Mikroprozessor gelieferten Ausgangsspannung zum Binärwert 1 einerseits sich über das NAND-Glied Nd auf die Steuerelektrode des Transistors Tr auswirken und diesen wieder in den Sperrzustand steuern kann, andererseits ein Setzen der bistabilen Kippstufe FF bewirkt, so daß je nach den dann herrschenden Belastungsverhältnissen des Speisestromkreises entweder wieder der Normalbetrieb oder der vorstehend beschriebene Begrenzungsbetrieb einsetzt.

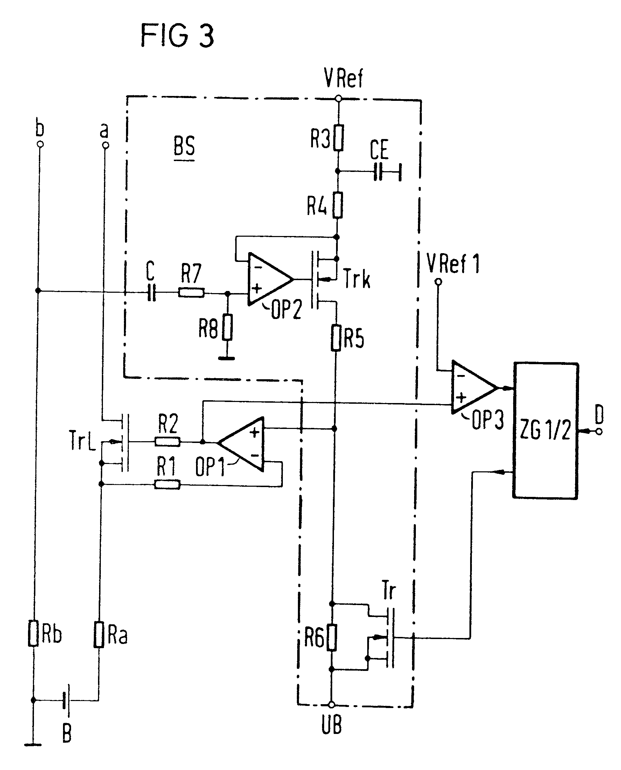

Bei der Beschreibung der in Figur 3 dargestellten Schaltungsanordnung wird im wesentlichen auf den der Erzeugung der Bezugsspannung dienende Schaltungsteil BS eingegangen, da der dort dargestellte Speisestromkreis zusammen mit dem Strombegrenzungselement den in Figur 1 dargestellten Verhältnissen entspricht und die Zeitschaltung gem. Figur 1 im wesentlichen durch das Zeitglied ZG1/2 vertreten wird, auf dessen Funktion dies für die Erläuterung der Bezugsspannungsschaltung jedoch nicht ankommt.

Wesentlicher Bestandteil der Bezugsspannungsschaltung BS ist ein FET-Transistor Trk, dessen Source-Elektrode über die Reihenschaltung der Widerstände R3 und R4 an einer Bezugsspannung VRef liegt. Die Drain-Elektrode ist über Widerstände R5 und R6 an einen Schaltungspunkt angeschlossen, der auf Speisespannungspotential liegt. Der Verbindungspunkt der Widerstände R5 und R6 bildet den erwähnten Ausgang der Bezugsspannungsschaltung. Die Source-Elektrode des Transistors Trk ist mit dem invertierenden Eingang eines zweiten Operationsverstärkers OP2 verbunden, dessen Ausgang an der Gate-Elektrode des Transistors Trk liegt und dessen nichtinvertierender Eingang am Verbindungspunkt von Widerständen R7 und R8 eines aus diesen Widerständen und einem Kondensator C gebildeten Spannungsteilers liegt. Der genannte Spannungsteiler ist dem Speisewiderstand Rb parallel geschaltet. Wegen des Kondensators C wird der Operationsverstärker OP2 nur von den Wechselstromanteilen des Speisestroms in dem den Speisewiderstand Rb enthaltenen Zweig der Teilnehmerspeiseschaltung beeinflußt.

Der Verbindungspunkt der schon erwähnten Widerstände R3 und R4 ist über einen Elektrolytkondensator CE mit dem Bezugspunkt verbunden, auf dem auch der eine Pol der Speisebatterie B liegt. Die Widerstände R3 und R4 bestimmen im wesentlichen zusammen mit dem Widerstand R6 durch Festlegung des Potentials am invertierenden Eingang des Operationsverstärkers OP1 den Wert des maximal zugelassenen Speisestroms. Das Verhältnis der Widerstände R3 und R4 ist dafür mitverantwortlich, daß dieser maximal zugelassene Speistrom im gewünschten Ausmaß von den Längswechselströmen auf der Teilnehmeranschlußleitung abhängig ist. Der Kondensator CE hat außerdem den Zweck Störspannungen zu vermeiden, die dadurch zur Auswirkung kommen könnten, daß die Bezugserde der Batterie sich von der Bezugserde für die auf den Teilnehmeranschlußleitungen fließenden Nutzsignalströmen potentialmäßig unterscheidet.

Der Ausgang des Operationsverstärkers OP1 ist mit dem einen Eingang eines Komparators OP3 verbunden, an dessen anderem Eingang eine weitere Bezugsspannung VRef1 liegt. Das vom Komparator OP3 gelieferte Ausgangssignal wird einer Zeitgliedschaltung ZG1 zugeführt. Das von dieser Zeitgliedschaltung gelieferte Ausgangssignal dient als Steuergröße für einen FET-Transistor Tr,dessen Haupstromstrecke dem erwähnten Widerstand R6 der Bezugsspannungsschaltung BS parallel geschaltet ist.

Nachstehend wird die Funktionsweise der erfindungsgemäßen Schaltungsanordnung näher erläutert. Solange der Strom im Speisestromkreis und damit durch den Speisewiderstand Ra unterhalb eines vorgegebenen Maximalwerts liegt, ist der Spannungsabfall über dem Speisewiderstand Ra derart vom Spannungsabfall verschieden, den der Konstantstrom, geliefert durch die durch den Transistor Trk gebildete Konstantstromquelle am Widerstand R6 hervorruft, daß das vom Operationsverstärker OP1 abgegebene Ausgangssignal, das das Steuersignal für den Transistor TrL darstellt, diesen in einem Leitfähigkeitszustand beläßt, indem er einen konstanten niederohmigen Widerstand für den Speisestromkreis darstellt.

Wenn der Spannungsabfall über dem Widerstand Ra in die Nähe des Spannungsabfalls über dem Widerstand R6 kommt, wird der Transistor TrL jedoch durch den Operationsverskärker OP1 so ausgesteuert, daß sein Widerstand ansteigt und damit den Strom im Speisestromkreis begrenzt.

Der Strom, den der Transistor Trk der Bezugssannungsschaltung liefert und der die Bezugsspannung für den Operationsverstärker OP1 ergibt, wird durch das Ausgangssignal des Operationsverstärkers OP2 bestimmt, das seinerseits vom Wechselspannungsanteil abhängt, der mit Hilfe des Spannungsteilers aus dem Kondensator C und den Widerständen R7 und R8 von dem den Speisewiderstand Rb enthaltenden Zweig der Speiseschaltung ausgekoppelt wird. Damit ist erfindungsgemäß erreicht,daß die Eingangsspannung für den nichtinvertierenden Eingang des Operationsverstärker OP2 sich mit der Amplitude und Richtung von Längswechselströmen ändert, die dem Speisestrom überlagert sind und die auf beiden Leitungsadern jeweils dieselbe Richtung und Amplitude haben. Damit ist sichergestellt, daß solche Längswechselströme nicht dazu führen können, daß der Grenzwert mit dem Speisestrom erreicht wird, bei dem durch Aussteuerung des Transistors TrL eine Speisestrombegrenzung einsetzt.

Die Änderung der Ausgangsspannung des Operationsverstärkers OP1, die den Begrenzungs- bzw. Regelbetrieb einleitet, führt aufgrund entsprechender Bemessung der Referenzspannung URef1, die den Komparator OP3 beaufschlagt, dazu, daß dieser Operationsverstärker hierauf mit einem Spannungssprung reagiert. Aufgrund der durch die Zeitgliedschaltung ZG1/2 bewirkten Verzögerung von beispielsweise einer Sekunde kann dieser Spannungssprung zunächst keine Auswirkungen auf die Schaltungsanordnung haben. Nach Ablauf der Verzögerungszeitspanne führt der Spannungssprung jedoch zur Abgabe eines Ausgangssignals, sofern der Operationsverstärker OP1 zu diesem Zeitpunkt noch die erwähnte veränderte Ausgangssignalspannung abgibt, was bedeutet, daß immer noch oder schon wieder eine unzulässig hohe Last des Speisestromkreises vorliegt. Durch dieses Ausgangssignal wird der Transistor Tr in den Leitzustand gesteuert mit der Folge, daß der nichtinvertierende Eingang des Operationsverstärkers OP1 auf das Potential UB gelangt, woraufhin er eine derartige Ausgangsspannung liefert, daß der Transistor TrL in den Sperrzustand gesteuert wird, also den Speisestromkreis unterbricht.

Die Zeitgliedschaltung ZG1/2 ist so geartet, daß ein Wiederanschaltebefehl, der an deren Eingang D gelangt und der vorzugsweise von einem Mikroprozessor stammt, der in erster Linie als Teilsteuerwerk der Vermittlungsstellt dient, der die dargestellte Schaltungsanordnung angehört, erst nach einer weiteren Verzögerungszeit zum erneuten Sperren des Transistors Tr führen kann. Die letztgenannte Verzögerungszeit ist wesentlich länger als die erstgenannte,sie beträgt beispielsweise 20s, und reicht aus, um den während des Begrenzungsbetriebs auf eine erhöhte Temperatur gelangten Transistor TrL sich wieder auf die normale Betriebstemperatur abkühlen zu lassen. Je nach den dann herrschenden Stromverhältnissen im Speisestromkreis bewirkt ein derartiger Wiederanschaltebefehl, daß entweder wieder der Normalbetrieb oder der vorstehend beschriebene Begrenzungsbetrieb einsetzt.

**Patentansprüche**

1. Schaltungsanordnung zum Schutz einer Teilnehmerspeiseschaltung in einer vorzugsweise digitalen Fernsprechvermittlungsanlage gegen Überlastungen aufgrund eines Kurzschlusses oder unzulässig niederohmigen Nebenschlusses zwischen den Adern einer Teilnehmeranschlußleitung, mit einem im Speisestromkreis der Teilnehmerspeiseschaltung (B, Ra, Rb) liegenden Strombegrenzungselement (Tr1), das
   a) in den Begrenzungszustand gesteuert wird, in dem es den Speisestrom auf einen zulässigen Wert begrenzt, wenn die Belastung der Teilnehmerspeiseschaltung einen unzulässig hohen Wert annimmt,
   b) in den Sperrzustand gesteuert wird, in dem es den Speisestromkreis unterbricht, wenn
   eine erste Zeitspanne im Begrenzungszustand überschritten wird,
   **dadurch gekennzeichnet,**
   daß das genannte Strombegrenzungselement
   c) ebenfalls in den Sperrzustand gesteuert wird, wenn der Begrenzungszustand innerhalb der ersten Zeitspanne zwar aufgehoben wird, jedoch innerhalb einer an die erste Zeitspanne sich anschließenden zweiten Zeitspanne erneut eingenommen wird,
   d) den Sperrzustand erst nach Ablauf einer dritten Zeitspanne wieder verlassen kann, die mit der Herstellung des Sperrzustandes beginnt und die gleiche Länge wie die zweite Zeitspanne aufweist.

2. Schaltungsanordnung nach Anspruch 1, dadurch gekennzeichnet, daß die erste Zeitspanne entsprechend der Aufladezeit der Kondensatoren der Teilnehmerspeiseschaltung und die zweite und dritte Zeitspanne entsprechend der für eine Abkühlung des Strombegrenzungselementes (TrL) von der während des Begrenzungsbetriebs erreichten Temperatur auf eine vor diesem Begrenzungsbetrieb vorhandene Betriebstemperatur erforderliche Zeit bemessen sind.

3. Schaltungsanordnung nach einem der Ansprüche 1 oder 2, dadurch gekennzeichnet, daß das Strombegrenzungselement ein Transistor (TrL), vorzugsweise Feldeffekt-Leistungstransistor ist, der mit seiner Hauptstromstrecke im Speisestromkreis der Teilnehmerschaltung (BS, RA, RB) liegt.

4. Schaltungsanordnung nach Anspruch 3, dadurch gekennzeichnet, daß sie einen Operationsverstärker (OP1) aufweist, der das Ansteuersignal für den im Speisestromkreis liegenden Transistor (TrL) liefert und dessen Eingänge einerseits von der Spannung am Speisewiderstand (Ra) desjenigen Zweigs der Teilnehmerspeiseschaltung, in den der Transistor (TrL) eingefügt ist, andererseits von der durch eine Referenzstromquelle (IK) an einem gesonderten Widerstand (R3) erzeugten Spannung beaufschlagt wird, und daß der gesonderte Widerstand (R3) durch die Hauptstromstrecke eines weiteren Transistors, vorzugsweise Feldeffekttransistors (Tr) niederohmig überbrückbar ist, der dann vom Sperrzustand in den leitenden Zustand gesteuert wird, wenn durch den im Speisestromkreis liegenden Transistor (TrL) der Speisestrom unterbrochen werden soll.

5. Schaltungsanordnung nach Anspruch 3 oder 4, dadurch gekennzeichnet, daß sie einen Komparator (OP2) aufweist, der einerseits von der Ausgangsspannung des ersten Operationsverstärkers (OP1), andererseits von einer Referenzspannungsquelle (VRef) beaufschlagt wird, ferner mit einem ersten Zeitglied (ZG1) versehen ist, dessen Eingang an den Ausgang des Komparators angeschlossen ist und das die genannte erste und zweite Zeitspanne bestimmt und dessen während der zweiten Zeitspanne abgegebene Ausgangsspannung zusammen mit der vom Komparator (OP2) gelieferten Ausgangsspannung zu einem Signal verknüpft wird, das als Rücksetzsignal für eine bistabile Kippstufe (FF), vorzugsweise D-Flip-Flop dient, deren im rückgesetzten Kippzustand abgegebene Ausgangsspannung dem weiteren Transistor (Tr) als den leitenden Zustand herbeiführendes Durchsteuersignal dient, sowie ein zweites Zeitglied (ZG2) aufweist, dem ebenfalls das von der bistabilen Kippstufe (FF) gelieferte Durchsteuersignal zugeführt wird und die daraufhin für die Dauer der dritten Zeitspanne eine Ausgangsspannung liefert, durch die die Weitergabe eines unabhängig erzeugten Durchsteuersignals für den weiteren Transistor (Tr), das auch als Setzsignal für die bistabile Kippstufe (FF) dient, unterbunden wird.

6. Schaltungsanordnung nach einem der vorhergehenden Ansprüche,
**dadurch gekennzeichnet,** daß
die Ansteuerschwelle, bei deren Überschreiten das Strombegrenzungselement (TrL) in den Begrenzungsbetrieb gesteuert wird, entsprechend der Richtung und Amplitude von auf den Adern (a, b) der Teilnehmeranschlußleitung als Störung auftretenden Längswechselströmen erhöht oder erniedrigt wird.

7. Schaltungsanordnung nach Anpruch 6,
**dadurch gekennzeichnet,** daß
zur Erzeugung einer Bezugspannung für die Ansteuerung des Strombegrenzungselements (TrL) eine Konstantstromquelle (Trk, OP2), deren Ausgangsstrom durch den auf einer Ader (b) der Teilnehmeranschlußleitung fließenden Wechselstromanteil bestimmt wird, sowie ein dazu in Reihe liegender Widerstand (R6) dient, an dem die genannte Bezugsspannung abgegriffen wird.

8. Schaltungsanordnung nach Anspruch 7,
**dadurch gekennzeichnet,** daß
die Konstantstromquelle ein mit einer weiteren Bezugspannung (Vref) betriebener Feldeffekttransistor (Trk) ist, dessen Source-Elektrode an den invertierenden Eingang eines Operationsverstärkers (OP2) angeschlossen ist und mit dessen Gate-Elektrode über den Ausgang des Operationsverstärkers in Verbindung steht, dessen nicht invertierender Eingang mit einer von dem genannten Störwechselstrom abgeleiteten Eingangsspannung beaufschlagt wird.

9. Schaltungsanordnung nach Anspruch 8,
**dadurch gekennzeichnet,** daß
die zum Betrieb des Feldeffekttransistors (Trk) dienende weitere Bezugspannung (VRef) über die Widerstände (R3, R4) eines Spannungsteilers zugeführt wird, dessen Teilerpunkt über einen Kondensator (CE) großer Kapazität am selben Bezugsschaltungspunkt wie die Speisebatterie liegt, und dessen Teilerverhältnis entsprechend dem Ausmaß der Berücksichtigung von Längswechselströmen festgelegt ist.

**Claims**

1. Circuit arrangement for protecting a subscriber line power-feeding circuit in a preferably digital telephone switching system against overloads due to a short circuit or a shunt with inadmissibly low resistance between the wires of a subscriber line, comprising a current-limiting element (Tr1) located in the power-feeding circuit of the subscriber line power-feeding circuit (B, Ra, Rb), in which
   a) is driven into the limiting state in which it limits the power-feeding current to a permissible value when the load on the subscriber line power-feeding circuit assumes an inadmissibly high value,
   b) is driven into the blocking state in which it interrupts the power-feeding circuit when a first period is exceeded in the limiting state,
characterised in that the said current-limiting element
   c) is also driven into the blocking state when the limiting state is cancelled within the first period but is resumed within a second period adjoining the first period,
   d) can only leave the blocking state after a third period has elapsed which begins with the establishment of the blocking state and has the same length as the second period.

2. Circuit arrangement according to Claim 1, characterised in that the first period is dimensioned in accordance with the charging time of the capacitors of the subscriber line power-feeding circuit and the second and third period are dimensioned in accordance with the time required for cooling the current-limiting element (TrL) from the temperature reached during the limiting operation to an operating temperature existing before this limiting operation.

3. Circuit arrangement according to one of Claims 1 or 2, characterised in that the current-limiting element is a transistor (TrL), preferably a field-effect power transistor which is located with its main current path in the power-feeding circuit of the subscriber line circuit (BS, RA, RB).

4. Circuit arrangement according to Claim 3, characterised in that it exhibits an operational amplifier (OP1) which supplies the drive signal for the transistor (TrL) located in the power-feeding circuit and to the inputs of which, on the one hand, the voltage across the power-feeding resistor (Ra) of the branch of the subscriber line power-feeding circuit in which the transistor (TrL) is inserted is applied and, on the other hand, the voltage generated at a separate resistor (R3) by a reference current source (IK) is applied, and in that the separate resistor (R3) can be bypassed in a low-resistant manner by the main current path of a further transistor, preferably field-effect transistor (Tr), which is then driven from the blocked state into the conducting state when the power-feeding current is to be interrupted by the transistor (TrL) located in the power-feeding circuit.

5. Circuit arrangement according to Claim 3 or 4, characterised in that it exhibits a comparator (OP2) to which, on the one hand, the output voltage of the first operational amplifier (OP1) and, on the other hand, a reference voltage source (VRef) is applied, is furthermore provided with a first timing section (ZG1), the input of which is connected to the output of the comparator and which determines the said first and second period and the output voltage of which, omitted during the second period, together with the output voltage delivered by the comparator (OP2), is combined to form a signal which is used as reset signal for a bistable flip flop (FF), preferably a D-type flip flop, the output voltage of which, emitted in the reset change state, is used by the further transistor (Tr) as drive signal producing the conducting state, and exhibits a second timing section (ZG2), which is also supplied with the drive signal delivered by the bistable flip flop (FF) and which thereupon supplies, for the duration of the third period, an output voltage by means of which the forwarding of an independently generated drive signal for the further transistor (Tr), which is also used as set signal for the bistable flip flop (FF), is suppressed.

6. Circuit arrangement according to one of the preceding claims, characterised in that the drive threshold, at the transgression of which the current-limiting element (TrL) is driven into the limiting operation, is increased or lowered in accordance with the direction and amplitude of longitudinal alternating currents occurring as interference on the wires (a, b) of the subscriber line.

7. Circuit arrangement according to Claim 6, characterised in that, for generating a reference voltage for driving the current-limiting element (TrL), a constant-current source (Trk, OP2), the output current of which is determined by the alternating-current component flowing in one wire (b) of the subscriber line, and a resistor (R6) located in series with said source, across which the said reference voltage is picked up, is used.

8. Circuit arrangement according to Claim 7, characterised in that the constant-current source is a field-effect transistor (Trk) which is operated by means of a further reference voltage (Vref) and the source electrode of which is connected to the inverting input of an operational amplifier (OP2) and to the gate electrode of which the output of the operational amplifier is connected, the non-inverting input of which is connected to an input voltage derived from the said alternating interference current.

9. Circuit arrangement according to Claim 8, characterised in that the further reference voltage (VRef) used for operating the field-effect transistor (Trk) is supplied via the resistors (R3, R4) of a voltage divider, the divider point of which is connected via a high-capacity capacitor (CE) to the same reference circuit point as the power-feeding battery, and the divider ratio of which is determined in accordance with the extent to which longitudinal alternating currents are taken into consideration.

**Revendications**

1. Montage pour protéger un circuit d'abonné dans une installation de commutation téléphonique, de préférence numérique, vis-à-vis de surcharges dues à un court-circuit ou à une dérivation de faible valeur ohmique, inadmissible, entre les conducteurs d'une ligne d'abonné, et comportant un élément de limitation de courant (Tr1) situé dans le circuit d'alimentation du circuit d'abonné (B,Ra,Rb) et qui
   a) est commandé dans l'état de limitation, dans lequel il limite le courant d'alimentation à une valeur admissible lorsque la charge du circuit d'abonné prend une valeur élevée inadmissible,
   b) est commandé dans l'état bloqué, dans lequel il interrompt le circuit d'alimentation, lorsqu'un premier intervalle de temps est dépassé dans l'état de limitation,
   caractérisé par le fait
   que ledit élément de limitation de courant
   c) est également commandé dans l'état bloqué lorsque l'état de limitation est suspendu pendant le premier intervalle de temps, mais est à nouveau établi pendant un second intervalle de temps qui succède au premier intervalle de temps,
   d) peut à nouveau quitter l'état bloqué uniquement après l'écoulement d'un troisième intervalle de temps, qui commence lors de l'établissement de l'état bloqué et possède la même durée que le second intervalle de temps.

2. Montage suivant la revendication 1, caractérisé par le fait que le premier intervalle de temps est dimensionné en fonction de la durée de charge des condensateurs du circuit d'abonné et que les second et troisième intervalles de temps sont dimensionnés en fonction de la durée nécessaire pour un refroidissement de l'élément de limitation de courant (TrL) de la température atteinte pendant le fonctionnement de limitation à une température de fonctionnement présente avant ce fonctionnement de limitation.

3.  Montage suivant l'une des revendications 1 ou 2, caractérisé par le fait
    que l'élément de limitation de courant est un transistor (TrL), de préférence un transistor de puissance à effet de champ, dont la section principale de courant est située dans le circuit d'alimentation du circuit d'abonné (BS,RA,RB).

4.  Montage suivant la revendication 3, caractérisé par le fait
    qu'il comporte un amplificateur opérationnel (OP1), qui délivre le signal de commande pour le transistor (TrL) situé dans le circuit d'alimentation et dont les entrées sont chargées d'une part par la tension aux bornes de la résistance d'alimentation (Ra) de la branche du circuit d'abonné, dans lequel le transistor (TrL) est inséré, et d'autre part par la tension produite par une source de tension de référence (IK) dans une résistance particulière (R3), et que la résistance particulière (R3) peut être shuntée, selon une liaison à faible valeur ohmique, par la section principale de courant d'un autre transistor, de préférence un transistor à effet de champ (Tr), qui passe de l'état bloqué à l'état conducteur lorsque le courant d'alimentation doit être interrompu par le transistor (TrL) situé dans le circuit d'alimentation.

5.  Montage suivant la revendication 3 ou 4, caractérisé par le fait
    qu'il comporte un comparateur (OP2), qui est chargé d'une part par la tension de sortie du premier amplificateur opérationnel (OP1) et d'autre part par une source de tension de référence (VRef), est équipé en outre d'un premier circuit de temporisation (ZG1), dont l'entrée est raccordée à la sortie du comparateur et qui détermine lesdits premier et second intervalles de temps et dont la tension de sortie, qu'il délivre pendant le second intervalle de temps, est réunie à la tension de sortie délivrée par le comparateur (OP2) pour former un signal qui est utilisé en tant que signal de remise à l'état initial pour un étage à bascule bistable (FF), de préférence une bascule bistable de type D, dont la tension de sortie, délivrée lorsque la bascule est ramenée à l'état initial, est appliquée à l'autre transistor (Tr) en tant que signal de mise à l'état passant, qui établit l'état conducteur, ainsi qu'un second circuit de temporisation (ZG2), auquel est également envoyé le signal de commande à l'état passant délivré par l'étage à bascule bistable (FF) et qui délivre en outre, pendant la durée du troisième intervalle de temps, une tension de sortie, qui interdit la retransmission d'un signal de mise à l'état passant, qui est produit de façon indépendante pour l'autre transistor (Tr) et qui est également utilisé en tant que signal de positionnement pour l'étage à bascule bistable (FF).

6.  Montage suivant l'une des revendications précédentes, caractérisé par le fait que le seuil de commande, lors du dépassement duquel l'élément de limitation de courant (TrL) est commandé dans le fonctionnement de limitation, est accru ou réduit en fonction du sens et de l'amplitude de courants alternatifs longitudinaux apparaissant en tant que perturbation dans les conducteurs (a,b) de la ligne d'abonné.

7.  Montage suivant la revendication 6, caractérisé par le fait que pour la production d'une tension de référence pour la commande de l'élément de limitation de courant (TrL), il est prévu une source de courant constant (Trk,OP2), dont le courant de sortie est déterminé par la composante de courant alternatif circulant dans un conducteur (b) de la ligne d'abonné, ainsi qu'une résistance (R6) branchée en série avec cette source et sur laquelle est prélevée ladite tension de référence.

8.  Montage suivant la revendication 7, caractérisé par le fait que la source de courant constant est un transistor à effet de champ (Trk) qui fonctionne avec une autre tension de référence (Vref) et dont l'électrode de source est raccordée à l'entrée inverseuse d'un amplificateur opérationnel (OP2) et est raccordée à l'électrode de grille du transistor par l'intermédiaire de la sortie de l'amplificateur opérationnel, dont l'entrée non inverseuse est chargée par une tension d'entrée dérivée dudit courant alternatif parasite.

9.  Montage suivant la revendication 9, caractérisé par le fait que l'autre tension de référence (VRef), qui est utilisée pour faire fonctionner le transistor à effet de champ (Trk), est envoyée par l'intermédiaire des résistances (R3,R4) d'un diviseur de tension, dont le point de division est raccordé par l'intermédiaire d'un condensateur (CE) de grande capacité au même point de circuit de référence que la batterie d'alimentation et dont le rapport de division est fixé conformément au degré de prise en compte de courants alternatifs longitudinaux.

# FIG 1

# FIG 2

# FIG 3